# EUROPÄISCHE PATENTSCHRIFT

(11) **EP 2 635 777 B1**
(45) Veröffentlichungstag und Bekanntmachung des Hinweises auf die Patenterteilung: **28.09.2016**
(21) Anmeldenummer: 11772897.2
(22) Anmeldetag: 18.10.2011
(51) Int. Cl.: F01N 3/023, F01N 3/035, F02B 37/013, F02D 41/02, F02B 29/04, F02D 41/00, F01N 13/00, F02B 29/00, F02B 37/00, F02M 26/15, F02M 26/24, F02M 26/38, F02M 26/00, F02M 26/08

(54) **KRAFTFAHRZEUG-BRENNKRAFTMASCHINE UND BETRIEBSVERFAHREN FÜR EINE KRAFTFAHRZEUG-BRENNKRAFTMASCHINE**
MOTOR VEHICLE INTERNAL COMBUSTION ENGINE AND METHOD FOR OPERATING A MOTOR VEHICLE INTERNAL COMBUSTION ENGINE
MOTEUR À COMBUSTION INTERNE D'UN VÉHICULE AUTOMOBILE ET PROCÉDÉ POUR FAIRE FONCTIONNER UN MOTEUR À COMBUSTION INTERNE D'UN VÉHICULE AUTOMOBILE

(30) Priorität: 04.11.2010 DE 102010050406
(43) Veröffentlichungstag der Anmeldung: 11.09.2013
(73) Patentinhaber: Daimler AG, 70327 Stuttgart (DE)
(72) Erfinder: BALTHES, Ortwin, 74343 Sachsenheim (DE); KEPPELER, Berthold, 73277 Owen (DE); MÜLLER, Siegfried, 74379 Ingersheim (DE)
(74) Vertreter: JENSEN & SON
(86) Internationale Anmeldenummer: PCT/EP2011/005243
(87) Internationale Veröffentlichungsnummer: WO 2012/059179

(56) Entgegenhaltungen:
- EP-A1- 1 653 058
- WO-A1-2008/058596
- WO-A2-2009/046292
- WO-A2-2009/142989
- DE-A1- 19 926 148
- US-A1- 2008 078 170

## Beschreibung

Die Erfindung betrifft ein Verfahren zum Betreiben einer Kraftfahrzeug-Brennkraftmaschine nach dem Oberbegriff des Anspruchs 1.

In der nicht vorveröffentlichten Patentanmeldung DE 102009021114.4 ist ein Verfahren zum Betreiben einer Brennkraftmaschine mit einem eine katalytisch und/oder filtertechnisch wirksame Abgasreinigungseinheit aufweisenden Abgastrakt beschrieben, bei welchem Brennräumen der Brennkraftmaschine Kraftstoff und ein zur Verbrennung des Kraftstoffes vorgesehenes, einen Luftanteil und einen Anteil von aus dem Abgastrakt rückgeführtem Abgas aufweisendes Verbrennungsgas zugeführt werden. Das rückgeführte Abgas ist dabei der Brennkraftmaschine mit einem Niederdruckanteil über einen stromab der Abgasreinigungseinheit vom Abgastrakt abzweigenden Niederdruckpfad und mit einem Hochdruckanteil über einen stromaufwärts einer Abgasturboladerturbine vom Abgastrakt abzweigenden Hochdruckpfad den Brennräumen zuführbar. Das Verfahren der DE 102009021114.4 ermöglicht unter anderem auch durch entsprechende Einstellung des Niederdruckanteils und des Hochdruckanteils von rückgeführtem Abgas eine effektive Abgasreinigung, wobei jedoch über die Laufzeit der Abgasreinigungseinheit eintretende Veränderungen von deren Wirksamkeit unberücksichtigt bleiben.

WO2009/046292A offenbart eine Brennkraftmaschine mit zwei seriell angeordneten Abgasturboladern, einer Hochdruckabgasrückführung stromauf von der ersten Turbine und einer Niederduckabgasrückführung stromab von der zweiten Turbine und von einer Abgasreinigungsvorrichtung.

Demgegenüber ist es Aufgabe der Erfindung, ein Betriebsverfahren für eine Kraftfahrzeug-Brennkraftmaschine anzugeben, welche eine über die Betriebszeit der Abgasreinigungseinheit möglichst gleichbleibende Abgasreinigungsleistung ermöglichen.

Diese Aufgabe wird durch ein Verfahren mit den Merkmalen des Anspruchs 1 gelöst. Die Erfinder haben erkannt, dass bei Einstellung eines mit zunehmender Betriebszeit im Wesentlichen abnehmenden Niederdruckanteils von rückgeführtem Abgas bei zumindest annähernd gleichen Betriebspunkten der Brennkraftmaschine im Laufe der Zeit auftretende Wirksamkeitsveränderungen der Abgasreinigungseinheit in vorteilhafter Weise ausgeglichen werden können. Daraus resultiert eine verbesserte Stabilität der Reinigungsleistung. Insbesondere ist ein Ausgleich eines alterungsbedingten Nachlassens der katalytischen Wirksamkeit der Abgasreinigungseinheit ermöglicht. Eine Erklärung für diesen überraschenden Effekt ist zumindest teilweise in einer alterungskompensierenden Verminderung des Abgasdurchsatzes durch die Abgasreinigungseinheit und in einer günstigen Beeinflussung der thermischen Verhältnisse in der Abgasreinigungseinheit zu sehen.

Das Verfahren ist insbesondere bei einer luftverdichtenden Brennkraftmaschine mit Vorteil anwendbar, jedoch auch bei Brennkraftmaschinen mit Funkenzündung anwendbar. Die katalytisch und/oder filtertechnisch wirksame Abgasreinigungseinheit umfasst bevorzugt einen Oxidationskatalysator und einen Partikelfilter.

Unter einem mit zunehmender Betriebszeit im Wesentlichen abnehmenden Niederdruckanteil von rückgeführtem Abgas ist dabei ein vergleichsweise langsam veränderlicher Vorgang zu verstehen, welcher sich typischerweise über eine vorgesehene Gesamtbetriebsdauer der Abgasreinigungseinheit erstreckt. Dabei ist von einer Gesamtbetriebsdauer auszugehen, welche etwa einer Laufstrecke von 100000 km bis 200000 km des zugehörigen Fahrzeugs entspricht. Bevorzugt ist die Abnahme des Niederdruckanteils an eine üblicherweise über der Betriebszeit auftretende alterungsbedingte Abnahme der Reinigungsleistung und/oder der katalytischen Wirksamkeit der Abgasreinigungsanlage geknüpft. Die Abnahme des Niederdruckanteils von rückgeführtem Abgas erfolgt zumindest im überwiegenden Teil des Betriebsbereichs der Brennkraftmaschine bevorzugt stetig über die vorgesehene Betriebszeit der Abgasreinigungsanlage. Zumindest ist über die Betriebszeit eine abnehmende Tendenz des Niederdruckanteils von rückgeführtem Abgas vorgesehen. Dabei kann in bestimmten Betriebszeitabschnitten eine stärkere Abnahme erfolgen, als in anderen Betriebszeitabschnitten. Beispielsweise kann entsprechend einem Alterungsverlauf des vorzugsweise vorhandenen Oxidationskatalysators bei einer Gesamtbetriebszeit entsprechend etwa 200000 km Laufstrecke während der ersten 50000 km eine stärkere Abnahme des Niederdruckanteils von rückgeführtem Abgas vorgesehen sein als in den verbleibenden restlichen 150000 km. Der Niederdruckanteil von rückgeführtem Abgas kann betriebspunktabhängig im bereich von 100 % bei einer neuen, ungealterten Abgasreinigungseinheit bis zu 0 % bei einer grenzwertig gealterten Abgasreinigungseinheit am Ende ihrer Betriebszeit abnehmen. Die Gesamtabgasrückführrate, d.h. der Anteil von rückgeführtem Abgas an dem gesamten, der Brennkraftmaschine zur Kraftstoffverbrennung zugeführtem Verbrennungsgas kann in weiten Grenzen variieren und beträgt typischerweise zwischen 5 % und 50 %.

In Ausgestaltung des Verfahrens wird bei zumindest annähernd gleichen Betriebspunkten der Brennkraftmaschine die Gesamtabgasrückführrate mit zunehmender Betriebszeit der Abgasreinigungseinheit im Wesentlichen konstant gehalten. Insbesondere ist vorgesehen, dass die Gesamtabgasrückführrate bei gleichen Betriebspunkten im Last-Drehzahl-Kennfeld der Brennkraftmaschine um weniger als 10 % relativ über eine Betriebszeit entsprechend einer Laufzeit von ca. 150000 km bis 200000 km variiert. Infolge einer über die vorgesehene Gesamtbetriebszeit der Abgasreinigungseinheit zumindest annähernd konstanten Gesamtabgasrückführrate für gleiche Betriebspunkte bleibt die Schadstoffrohemission der Brennkraftmaschine bei gleichen Betriebspunkten ebenfalls zumindest annähernd zeitlich konstant, was für eine Auslegung der Abgasreinigungseinheit vorteilhaft ist. Alterungsbedingte Wirksamkeitsveränderungen der Abgasreinigungseinheit bzw. einer zugehörigen Abgasreinigungskomponente im Verlauf der Betriebszeit werden erfindungsgemäß überwiegend oder nahezu ausschließlich über eine Verminderung des Verhältnisses von Niederdruckanteil zu Hochdruckanteil der rückgeführten Abgasmenge ausgeglichen.

In weiterer Ausgestaltung des Verfahrens wird mit zunehmendem Abgasmassenstrom stromauf von der Abzweigung des Niederdruckanteils ein im Wesentlichen abnehmender Niederdruckanteil eingestellt. Durch diese Maßnahme wird der Zunahme des Abgasmassenstroms entgegengewirkt, so dass diese geringer ausfällt. Dementsprechend wird die Abgasreinigungseinheit mit zunehmender Betriebszeit bzw. zunehmender Alterung in Bezug auf den Abgasdurchsatz zunehmend weniger stark belastet. Dadurch ist eine zumindest teilweise Kompensation einer alterungsbedingten Leistungseinbuße ermöglicht.

In weiterer Ausgestaltung des Verfahrens wird mit zunehmendem Abgasmassenstrom stromauf von der Abzweigung des Niederdruckanteils eine im Wesentlichen abnehmende Gesamtabgasrückführrate eingestellt. Dabei ist es in weiterer Ausgestaltung des Verfahrens vorgesehen, dass für den Niederdruckanteil eine stärkere Abnahme eingestellt wird als für die Abnahme der Gesamtabgasrückführrate. Durch diese Maßnahmen wird ebenfalls der wirkungsgradvermindernden Wirkung eines zunehmenden Abgasmassenstroms in vorteilhafter Weise entgegengewirkt.

In weiterer Ausgestaltung des Verfahrens wird bei einer wenigstens annähernd neuen Abgasreinigungsanlage der Niederdruckanteil wenigstens doppelt so groß eingestellt wie nach einer Betriebszeit der Abgasreinigungseinheit, die einer Laufzeit des zugehörigen Kraftfahrzeugs von wenigstens 100000 km entspricht. Wie durch Versuche verifiziert werden konnte, wird durch diese Festlegung ein zumindest annähernd optimaler Ausgleich von alterungsbedingten Wirksamkeitseinbußen der Abgasreinigungseinheit bzw. von deren Abgasreinigungskomponenten erzielt.

In weiterer Ausgestaltung des Verfahrens wird stromab eines Oxidationskatalysators der Abgasreinigungseinheit mittels eines SCR-Katalysators eine Reduktion von im Abgas enthaltenen Stickoxiden vorgenommen. Unter einem SCR-Katalysator ist dabei wie allgemein üblich eine katalytische Abgasreinigungskomponente zu verstehen, welche in der Lage ist, mittels Ammoniak als Reduktionsmittel bei Sauerstoffüberschuss eine Reduktion von Stickoxiden zu katalysieren. Es kann eine selektive katalytische Stickoxidreduktion stromauf und/oder stromab von der Abzweigung des Niederdruckanteils von rückgeführtem Abgas vorgesehen sein. Besonders bevorzugt ist es, zumindest stromab von der Abzweigung des Niederdruckanteils einen insbesondere monolithischen SCR-Katalysator vorzusehen. Zusätzlich kann eine zur selektiven katalytischen Stickoxidreduktion befähigte Abgasreinigungskomponente stromauf von der Abzweigung des Niederdruckanteils vorgesehen sein. Vorzugsweise ist außerdem stromauf von der Abzweigung des Niederdruckanteils eine Partikelverminderung des Abgases, insbesondere mittels eines Partikelfilters vorgesehen. Die Abgasreinigungseinheit stromauf der Abzweigung des Niederdruckanteils von rückgeführtem Abgas umfasst somit in diesem Fall wenigstens einen Oxidationskatalysator und einen Partikelfilter. Letzterer ist bevorzugt als wanddurchströmter monoltihischer Partikelfilter, insbesondere auf SiC-Basis, ausgebildet. Bevorzugt ist es, für den Partikelfilter eine katalytische Beschichtung vorzusehen. Diese kann beispielsweise eine oxidationskatalytische bzw. eine einen Rußabbrand fördernde Funktion aufweisen. Durch diese Aufteilung von Abgasreinigungsmaßnahmen in Verbindung mit der vorgesehenen Niederdruck-Abgasrückführung wird eine besonders langzeitstabile Abgasreinigungswirkung, insbesondere bezüglich einer Stickoxidverminderung bewirkt.

In weiterer Ausgestaltung des Verfahrens werden der Niederdruckanteil und/oder eine Menge von nacheingespritztem Kraftstoff derart eingestellt, dass der Stickstoffdioxid-Anteil von im Abgas enthaltenem Stickoxid ausgangsseitig des Oxidationskatalysators und/oder eingangsseitig des SCR-Katalysators weniger als 70 %, insbesondere annähernd 50 % oder weniger beträgt. Ist es nicht möglich, durch eine Variation des Niederdruckanteils den NO2-Anteil auf diese Werte zu begrenzen, so ist es vorzugsweise vorgesehen, eine späte Kraftstoffnacheinspritzung derart vorzunehmen, dass diese Werte erreicht werden. Auf diese Weise kann eine Optimierung der katalytischen Wirkung des SCR-Katalysators erzielt werden. Infolge des über die Laufzeit abnehmenden Niederdruckanteils von rückgeführtem Abgas bei vergleichbaren Betriebspunkten ist somit die Optimierung langzeitstabil ermöglicht. Die gegebenenfalls vorgenommene Nacheinspritzung von Kraftstoff in einen oder mehrere Brennräume der Brennkraftmaschine erfolgt dabei bevorzugt in einem derart späten Zeitpunkt im Arbeitstakt, dass das Abgas mit unverbrannten oder teilverbrannten Kraftstoffbestandteilen angereichert wird.

Eine zur Durchführung eines oben beschriebenen Verfahrens ist eine Kraftfahrzeug-Brennkraftmaschine vorteilhaft, welche ein Luftzufuhrsystem zur Zufuhr von Verbrennungsluft zur Brennkraftmaschine und einen Abgase der Brennkraftmaschine aufnehmenden Abgastrakt aufweist, in welchem in Abgasströmungsrichtung hintereinander ein Oxidationskatalysator, ein Partikelfilter und ein SCR-Katalysator angeordnet sind. Dabei ist für die erfindungsgemäße Brennkraftmaschine eine Zugabevorrichtung zur Zugabe von Ammoniak oder eines zur Abspaltung von Ammoniak befähigten Reduktionsmittels in dem Abgastrakt stromauf des SCR-Katalysators vorgesehen. Weiterhin ist ein insbesondere erster Abgasturbolader vorgesehen, dessen Turbine stromauf vom Oxidationskatalysator im Abgastrakt angeordnet ist, und zur Rückführung von Abgas aus dem Abgastrakt in das Luftzufuhrsystem ist eine stromauf der Turbine des insbesondere ersten Abgasturboladers vom Abgastrakt abzweigende erste Abgasrückführleitung und eine zwischen dem Partikelfilter und dem SCR-Katalysator vom Abgastrakt abzweigende zweite Abgasrückführleitung vorgesehen. Dabei sind ferner Einstellmittel zur Einstellung von über die erste und/oder über die zweite Abgasrückführleitung in das Luftzufuhrsystem rückgeführter Abgasmenge vorgesehen. Die erste, stromauf der Abgasturboladerturbine abzweigende Abgasrückführleitung stellt einen Hochdruck-Abgasrückführpfad dar, über welchen ein Hochdruckanteil von rückgeführtem Abgas aus dem Abgastrakt in das Luftzufuhrsystem geleitet werden kann. Demgegenüber stellt die zweite, zwischen dem Partikelfilter und dem SCR-Katalysator vom Abgastrakt abzweigende Abgasrückführleitung einen Niederdruck-Abgasrückführpfad dar, über welchen ein Niederdruckanteil von rückgeführtem Abgas in das Luftzufuhrsystem geleitet werden kann. Infolge der erfindungsgemäß vorgesehenen Einstellmittel ist eine variable Einstellung des Verhältnisses von Niederdruckanteil zu Hochdruckanteil des insgesamt rückgeführten Abgases ebenso ermöglicht, wie eine variable Einstellung der Gesamtabgasrückführmenge.

Die Einstellmittel zur Einstellung des Niederdruckanteils bzw. des Hochdruckanteils von insgesamt rückgeführtem Abgas werden dabei erfindungsgemäß insbesondere dazu genutzt, abhängig vom Betriebspunkt der Brennkraftmaschine und vom Alterungszustand insbesondere des Oxidationskatalysators einen für die katalytische Stickoxidverminderung des SCR-Katalysators günstigen Anteil von Stickstoffdioxid (NO2) an den im Abgas vorhandenen Stickoxiden (NOx) eingangsseitig des SCR-Katalysators einzustellen. Dabei wird insbesondere eine Einstellung des Niederdruckanteils von rückgeführtem Abgas derart vorgenommen, dass ein Anteil von NO2 resultiert, welcher weniger als 70 % beträgt. Besonders bevorzugt ist eine Einstellung des Niederdruckanteils derart, dass der NO2-Anteil von im Abgas enthaltenem NO2 annähernd 50 % beträgt.

Die stromauf des SCR-Katalysators vorgesehene Zugabe von Ammoniak oder eines zur Abspaltung von Ammoniak befähigten Reduktionsmittels kann zwischen dem Oxidationskatalysator und dem Partikelfilter oder zusätzlich oder alternativ zwischen dem Partikelfilter und dem SCR-Katalysator, stromauf oder stromab der Abzweigestelle der zweiten Abgasrückführleitung vorgesehen sein. Im Falle eines mit einer oxidationskatalytisch wirksamen Beschichtung versehenen Partikelfilters ist eine Anordnung zwischen dem Partikelfilter und dem SCR-Katalysator bevorzugt. Im Falle einer Beschichtung des Partikelfilters mit einem SCR-Katalysatormaterial ist eine Anordnung zwischen dem Oxidationskatalysator und dem Partikelfilter bevorzugt.

Es kann vorgesehen sein, dass die Einstellmittel zur Einstellung der rückgeführten Abgasmenge ein einstellbares Drosselelement, angeordnet im Abgastrakt zwischen der Abzweigestelle der zweiten Abgasrückführleitung und dem SCR-Katalysator und/oder in der zweiten Abgasrückführleitung vor deren Einmündestelle in das Luftzufuhrsystem, und/oder ein einstellbares Drosselelement, angeordnet in der ersten Abgasrückführleitung vor deren Einmündestelle in das Luftzufuhrsystem, umfassen.

Es kann vorgesehen sein, dass der Partikelfilter eine Beschichtung mit einem SCR-Katalysatormaterial aufweist. Infolge dieser Ausgestaltung ist eine selektive katalytische Reduktion von Stickoxiden mittels Ammoniak sowohl stromauf von der Abzweigung der zweiten Abgasrückführleitung als auch stromab von dieser ermöglicht. Die SCR-Katalysatormaterialbeschichtung des Partikelfilters weist auch bei niedrigen Lasten der Brennkraftmaschine eine zur Stickoxidreduktion ausreichende Temperatur auf. Dies ermöglicht selbst bei ungünstigen Bedingungen, bei welchen der SCR-Katalysator stromab der Abzweigestelle der zweiten Abgasrückführleitung unterhalb seiner Anspringtemperatur liegt, eine ausreichende Verminderung von Stickoxiden. Ferner ist es durch Steigerung der über den Niederdruckpfad rückgeführten Abgasmenge ermöglicht, den SCR-Katalysator in Bezug auf die durch ihn strömende Abgasmenge zu entlasten und auf diese Weise seine Wirksamkeit zu verbessern.

Es kann vorgesehen sein, dass in der zweiten Abgasrückführleitung ein zweiter SCR-Katalysator angeordnet ist. Dadurch ist eine weitere Steigerung des Stickoxidumsatzes ermöglicht. Der zweite SCR-Katalysator in der zweiten Abgasrückführleitung ermöglicht eine weitere Entlastung speziell des stromab des Abzweigs der zweiten Abgasrückführleitung angeordneten SCR-Katalysators und gegebenenfalls auch der SCR-Katalysatormaterialbeschichtung des stromauf angeordneten Partikelfilters.

Es kann vorgesehen sein, dass ein zweiter Abgasturbolader vorgesehen ist, dessen Turbine stromab von der Turbine des ersten Abgasturboladers im Abgastrakt angeordnet ist. Dies ermöglicht eine zweistufige Aufladung der Brennkraftmaschine mit entsprechender Leistungssteigerung bei einem zugleich verringerten Ausstoß von Schadstoffen.

Es kann vorgesehen sein, dass im Luftzufuhrsystem ein umgehbarerer Ladeluftkühler zur Kühlung von verdichteter Verbrennungsluft angeordnet ist. Dies ermöglicht eine variable Absenkung der Verbrennungstemperatur von in den Brennräumen der Brennkraftmaschine verbranntem Kraftstoff und damit eine weitere Absenkung der Schadstoffemission der Brennkraftmaschine, insbesondere bezüglich der Stickoxide.

Es kann vorgesehen sein, dass in der ersten Abgasrückführleitung und/oder in der zweiten Abgasrückführleitung ein Abgaskühler zur Kühlung von zum Luftzufuhrsystem rückgeführtem Abgas angeordnet ist. Auch diese Maßnahme ermöglicht eine Absenkung der Verbrennungstemperaturen. Dabei ist es vorteilhaft, wenn in weiterer Ausgestaltung der Erfindung für den in der ersten Abgasrückführleitung und/oder für den in der zweiten Abgasrückführleitung angeordneten Abgaskühler eine Umgehungsleitung, insbesondere mit Durchsatzregulierung vorgesehen ist.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in den Figurenbeschreibungen genannten und/oder in den Figuren alleine gezeigten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen.

Die Figuren zeigen in:
- Fig. 1: eine schematische Darstellung einer vorteilhaften Ausführung einer Brennkraftmaschine mit Luftzufuhrsystem und Abgastrakt mit Abgasreinigungsanlage zur Durchführung des erfindungsgemäßen Verfahrens und
- Fig. 2: ein Diagramm mit einer schematischen Darstellung des im erfindungsgemäßen Verfahren vorgesehenen Verlaufs von Niederdruckanteil und Gesamtmenge einer Abgasrückführung über eine Betriebszeit der Abgasreinigungsanlage einer Brennkraftmaschine entsprechend Fig. 1 und
- Fig. 3: ein Diagramm mit einer schematischen Darstellung des im erfindungsgemäßen Verfahren vorgesehenen Verlaufs von Niederdruckanteil und Gesamtmenge einer Abgasrückführung in Abhängigkeit von einer Raumgeschwindigkeit des von einer Brennkraftmaschine entsprechend Fig. 1 gelieferten Abgases.

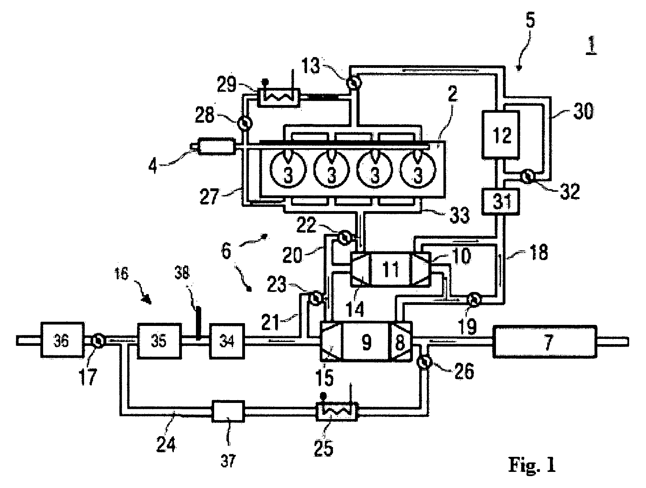

Figur 1 zeigt eine schematische Darstellung einer vorteilhaften Ausführung einer luftverdichtenden Brennkraftmaschine 1 mit zweistufiger Aufladung und zweistufiger Abgasrückführung, bei welcher das weiter unten näher erläuterte Verfahren anwendbar ist. Die Brennkraftmaschine 1 umfasst einen Motorblock 2 mit Arbeitszylindern 3 mit nicht näher gekennzeichneten Brennräumen, wobei den Arbeitszylindern 3 bzw. deren jeweiligem Brennraum mittels einer Hochdruckpumpe 4 Kraftstoff zuführbar ist. Ein Luftzufuhrsystem 5 führt den Arbeitszylindern 3 bzw. deren jeweiligem Brennraum Verbrennungsluft zu und ein Abgastrakt 6 führt Abgas aus den Arbeitszylindern 3 ab. Im Luftzufuhrsystem 5 sind ein Luftfilter 7, ein erster Verdichter 10 eines als Hochdruck-Abgasturbolader 11 ausgebildeten ersten Abgasturboladers, ein zweiter Verdichter 8 eines als NiederdruckAbgasturbolader 9 ausgebildeten zweiten Abgasturboladers, ein Ladeluftkühler 12 und eine Drosselklappe 13 angeordnet.

Im Abgastrakt 6 sind ausgehend vom Motorblock 2 in Strömungsrichtung des Abgases eine dem Hochdruck-Abgasturbolader 11 zugeordnete erste Turbine 14, eine dem Niederdruck-Abgasturbolader 9 zugeordnete zweite Turbine 15, eine Abgasreinigungseinheit 16 und eine nachgeschaltete Abgasaufstauklappe 17 angeordnet. Die Abgasreinigungseinheit 16 weist vorliegend einen Partikelfilter 35 sowie einen vorgeschalteten Oxidationskatalysator 34 auf.

Der Partikelfilter 35 kann in Sintermetallausführung oder als wanddurchströmte Filtereinheit in Wabenkörperbauweise ausgebildet sein. Vorzugsweise ist für den Partikelfilter eine katalytische Beschichtung, beispielsweise mit einem oxidationskatalytisch wirksamen Material vorgesehen. In einer besonders bevorzugten Ausführungsform ist eine Beschichtung mit einem SCR-Katalysatormaterial vorgesehen.

Stromauf und/oder stromab der Abgasreinigungseinheit 16 können ein oder mehrere weitere reinigungswirksame Abgasnachbehandlungskomponenten, wie beispielsweise ein Oxidationskatalysator, ein SCR-Katalysator und/oder ein Stickoxid-Speicherkatalysator im Abgastrakt 6 angeordnet sein. Derartige Abgasreinigungskomponenten sind dem Fachmann bekannt, weshalb hier nicht näher darauf eingegangen wird. Vorliegend ist stromab des Partikelfilters 35 ein SCR-Katalysator 36 im Abgastrakt 6 angeordnet. Zur Zufuhr von Ammoniak zum SCR-Katalysator 36 bzw. gegebenenfalls zur SCR-Katalysatorbeschichtung des Partikelfilters 35 ist eine Zugabevorrichtung 38 vorgesehen, welche Ammoniak oder ein zur Abspaltung von Ammoniak befähigtes Reduktionsmittel wie beispielsweise Harnstoff-Wasserlösung, in den Abgastrakt 6 eindüsen kann. Zur Verbesserung einer Gleichverteilung kann ein nicht gesondert dargestellter nachgeschalteter Mischer im Abgastrakt 6 angeordnet sein.

Stromab des zweiten Verdichters 8 zweigt ein den Hochdruck-Abgasturbolader 11 umgehender Verdichterbypass 18 ab, in welchem ein Verdichterbypassventil 19 angeordnet ist, so dass mittels des zweiten Verdichters 8 komprimierte Frischluft bzw. ein Frischluft-Abgasgemisch, abhängig von einem Betriebszustand der Brennkraftmaschine 1 und einer daraus resultierenden Stellung des Verdichterbypassventils 19 den ersten Verdichter 10 in mehr oder weniger großem Umfang passieren kann. Auf diese Weise ist ein Ladedruck der Brennkraftmaschine 1 regelbar bzw. bei niedrigen Drehzahlen der Brennkraftmaschine 1, bei welchen der Hochdruck-Abgasturbolader 11 aufgrund eines zu geringen Abgasdrucks noch nicht betreibbar ist, der erste Verdichter 10 über den Verdichterbypass 18 umgehbar.

Im Abgastrakt 6 sind ebenfalls Bypässe 20, 21 angeordnet, welche jeweils eine Turbine 14, 15 umgehen, nämlich ein erster Turbinenbypass 20, in welchem ein erstes Turbinenbypassventil 22 angeordnet ist und ein zweiter Turbinenbypass 21, in welchem ein zweites Turbinenbypassventil 23 angeordnet ist. Bei niedrigen Drehzahlen der Brennkraftmaschine 1 und daraus folgend einem niedrigen Abgasdruck ist der Hochdruck-Abgasturbolader 11 noch nicht betreibbar, daher ist in diesem Betriebszustand das erste Turbinenbypassventil 22 derart ansteuerbar, dass ein Abgasmassenstrom über den ersten Turbinenbypass 20 an der ersten Turbine 14 vorbei leitbar ist und so vollständig zum Antrieb der zweiten Turbine 15 des Niederdruck-Abgasturboladers 9 nutzbar ist.

Bei sehr hohen Drehzahlen der Brennkraftmaschine 1 ist der auf die Turbinen 14, 15 der Abgasturbolader 9, 11 einwirkende Abgasdruck hoch, wodurch diese hohe Drehzahlen erreichen. Daraus folgt eine hohe Verdichterleistung der Verdichter 8, 10 der Abgasturbolader 9, 11 und dadurch ein hoher Ladedruck des Frischluft-Abgasgemisches. Dieser darf jedoch einen vorgegebenen Wert nicht überschreiten, so dass bei Erreichen dieses vorgegebenen Wertes ein oder beide Turbinenbypässe 20, 21 als so genanntes Wastegate nutzbar sind. Dabei sind die Turbinenbypassventile 22, 23 derart ansteuerbar, dass sie beispielsweise teilweise öffnen, wodurch ein Teil des Abgasmassenstroms an den Turbinen 14, 15 vorbei leitbar und dadurch der auf die Turbinen 14, 15 einwirkende und diese antreibende Abgasdruck verringerbar ist. Daraus resultiert eine geringere Kompression des durch die Verdichter 8, 10 der Abgasturbolader 9, 11 verdichteten Gases, d. h. ein geringerer Ladedruck.

Mittels dieser Anordnung des Niederdruck-Abgasturboladers 9 und des Hochdruck-Abgasturboladers 11 ist eine Leistung der Brennkraftmaschine 1 in unterschiedlichen Drehzahlbereichen optimierbar und ein jeweils optimaler Ladedruck bereitstellbar.

Dadurch ist insbesondere ein so genanntes Turboloch, d. h. ein fehlender oder geringer Ladedruck und daraus resultierend eine geringe Leistung einer derartigen Brennkraftmaschine 1 in niedrigen Drehzahlbereichen verhinderbar oder dieses Problem zumindest deutlich reduzierbar und damit beispielsweise ein Fahrverhalten und ein Treibstoffverbrauch eines durch diese Brennkraftmaschine 1 angetriebenen Fahrzeugs optimierbar.

Stromab der Abgasreinigungseinheit 16, d. h. auf einer Niederdruckseite des Abgastrakts 6, zweigt vom Abgastrakt 6 zwischen dem Partikelfilter 35 und dem SCR-Katalysator 36 eine Niederdruck-Abgasrückführungs-(AGR)-Leitung 24 ab, die stromauf des zweiten Verdichters 8 des Niederdruck-Abgasturboladers 9 und stromab des Luftfilters 7 wieder in das Luftzufuhrsystem 5 mündet. In der Niederdruck-AGR-Leitung 24 ist stromab von der Abzweigung vom Abgastrakt 6 in Strömungsrichtung eines NiederdruckAGR-Massenstroms gesehen ein Niederdruck-AGR-Kühler 25 und ein Niederdruck-AGR-Ventil 26 angeordnet. Optional kann die Kühlung des Niederdruck-AGR-Massenstroms unter Entfall des Niederdruck-AGR-Kühlers 25 über die verwendeten Rohrlängen oder Rohrgestaltungen erfolgen. Die Kühlung des Niederdruck-AGR-Massenstroms stellt sicher, dass an den Verdichtern 8, 10 im Abgasrückführungsbetrieb keine unzulässig hohen Temperaturen auftreten. In der in Fig. 1 dargestellten besonders bevorzugten Ausführungsform ist weiterhin in der Niederdruck-AGR-Leitung 24 stromauf des Niederdruck-AGR-Kühlers 25 ein zweiter SCR-Katalysator 37 vorgesehen. Der zweite SCR-Katalysator 37 ermöglicht eine Verminderung von im rückgeführten Abgas gegebenenfalls vorhandenem Stickoxid und/oder Ammoniak bzw. Sauerstoff. Dadurch werden wiederum Ablagerungen und Korrosionserscheinungen vermieden oder vermindert und es ist ein verbesserter Ablauf der in den Brennräumen der Brennkraftmaschine 1 erfolgenden Kraftstoffverbrennung ermöglicht. Der zweite SCR-Katalysator kann darüber hinaus eine Filterfunktion übernehmen, so dass zumindest vergleichsweise grobe Partikel aus dem über den Niederdruckpfad rückgeführten Abgas entfernt werden.

Stromauf der Turbine 14 des Hochdruck-Abgasturboladers 11, d. h. auf einer Hochdruckseite des Abgastrakts 6, zweigt von einem Abgaskrümmer 33 des Abgastrakts 6 eine Hochdruck-AGR-Leitung 27 ab, die stromab der Drosselklappe 13 in das Luftzufuhrsystem 5 mündet. Mittels dieser Hochdruck-AGR-Leitung 27 ist ein Hochdruck-AGR-Massenstrom über ein Hochdruck-AGR-Ventil 28 in das Luftzufuhrsystem 5 leitbar. In der dargestellten Ausführungsform ist in der Hochdruck-AGR-Leitung 27 ein Hochdruck-AGR-Kühler 29 angeordnet, welcher gegebenenfalls mit dem Niederdruck-AGR-Kühler 25 baulich und/oder funktionell vereinigt sein kann. Optional kann jedoch eine Kühlung des Hochdruck-AGR-Massenstroms beispielsweise auch über eine Rohrlänge der Hochdruck-AGR-Leitung 27 erfolgen. Für den Niederdruck-AGR-Kühler 25 und/oder den Hochdruck-AGR-Kühler 29 können Umgehungsleitungen, insbesondere mit Einstellmitteln zur variablen Durchsatzeinstellung vorgesehen sein, was nicht gesondert dargestellt ist.

Die dargestellte Brennkraftmaschine 1 weist somit eine Abgasrückführung auf, bei der Abgas stromauf der Turbine 14 des Hochdruck-Abgasturboladers 11 über einen entsprechenden Hochdruckpfad sowie stromab der Abgasreinigungseinheit 16 über einen entsprechenden Niederdruckpfad dem Abgastrakt 6 entnehmbar ist und, gegebenenfalls nach Abkühlung, stromauf des Verdichters 8 des Niederdruck-Abgasturboladers 9 sowie stromab der Drosselklappe 13 des Luftzufuhrsystems 5 und damit den Brennräumen 3 der Brennkraftmaschine 1 zuführbar ist. Die Brennkraftmaschine 1 ist dabei wahlweise ohne Abgasrückführung, mit Hochdruck-Abgasrückführung oder Niederdruck-Abgasrückführung oder gleichzeitig mit Hochdruck-Abgasrückführung und Niederdruck-Abgasrückführung mit jeweils variablen Abgasrückführmengen betreibbar. Somit ist den Brennräumen 3 der Brennkraftmaschine 1 ein Verbrennungsgas mit einer in weiten Grenzen veränderbaren Abgasrückführrate mit variablem Niederdruckanteil und variablem Hochdruckanteil zuführbar. Eine Einstellung einer Abgasrückführungsmenge, d. h. des rückgeführten Abgasmassenstromes und damit der AGR-Rate, erfolgt mittels der Abgasaufstauklappe 17 und/oder des Niederdruck-AGR-Ventils 26 sowie mittels des Hochdruck-AGR-Ventils 28 als Einstellmitteln, womit der Niederdruckanteil sowie der Hochdruckanteil des insgesamt rückgeführten Abgases ebenfalls in weiten Grenzen einstellbar sind. Dies erzielt insgesamt saubere Abgasrückführungsmassenströme, eine bessere Abkühlung der Abgasrückführungsmassenströme, vermeidet Versottung der Abgasrückführungskühler 25, 29 und ermöglicht eine gute Durchmischung der Abgasrückführungsmassenströme mit Frischluft im Luftzufuhrsystem 5. Es sind hohe Abgasrückführungsraten möglich und es ist ein homogener oder zumindest teilhomogener Betrieb der Brennkraftmaschine 1 möglich.

Die Abgasaufstauklappe 17 und das Niederdruck-AGR-Ventil 26 sind vorliegend Stellglieder einer als Vorsteuerregelung ausgeführten Abgasrückführungsregelung. Sowohl das Niederdruck-AGR-Ventil 26 wie auch die Abgasaufstauklappe 17 sind vorzugsweise kontinuierlich verstellbar. Mit Hilfe der Abgasaufstauklappe 17 und des Niederdruck-AGR-Ventils 26 vor dem Verdichter 8 ist der Niederdruckanteil am gesamten Abgasrückführungsmassenstrom einstellbar und letzterer somit ebenfalls beeinflussbar. Solange ein ausreichendes Druckgefälle zur Förderung des Niederdruck-Abgasrückführungsmassenstroms vorhanden ist, ist dieser zunächst ausschließlich über das Niederdruck-AGR-Ventil 26 einstellbar. Ist dies nicht mehr der Fall, ist zusätzlich die Abgasaufstauklappe 17 etwas anstellbar, um das Druckgefälle über das Niederdruck-AGR-Ventil 26 zu erhöhen. Dabei ist eine sehr gute Durchmischung des Niederdruck-Abbgasrückführungsmassenstroms mit der Frischluft sichergestellt. Ein weiterer Vorteil besteht unter anderem darin, dass das über den Niederdruckpfad rückgeführte Abgas sauber und nahezu pulsationsfrei ist. Zusätzlich steht eine erhöhte Verdichterleistung zur Verfügung, da bei einem hohen Niederdruckanteil rückgeführten Abgases ein vergleichsweise hoher Abgasmassenstrom durch die Turbinen 14, 15 leitbar ist. Da das rückgeführte Abgas nach den Verdichtern 8, 10 durch den leistungsfähigen Ladeluftkühler 12 leitbar ist, kann die Temperatur des Frischluft und Abgas umfassenden Verbrennungsgases auch relativ kalt gehalten werden. Die Brennkraftmaschine 1 ist je nach Bedarf sowohl mit der Hochdruck-Abgasrückführung als auch mit der Niederdruck-Abgasrückführung oder mit beiden betreibbar.

Mittels eines vorzugsweise vorgesehenen, den Ladeluftkühler 12 umgehenden Ladeluftkühlerbypasses 30 im Luftzufuhrsystem 5, ist eine Versottung des Ladeluftkühlers 12 vermeidbar. Die Gefahr einer so genannten Versottung besteht beispielsweise, wenn ein Wasserdampf und gegebenenfalls Partikel enthaltendes Gasgemisch im Ladeluftkühler 12 unter den Taupunkt abgekühlt wird und Kondensatbildung eintritt.

Vorzugsweise ist vorgesehen, dass das gesamte Frischluft-Abgasgemisch oder auch nur ein Teil davon über den Ladeluftkühlerbypass 30, welcher stromauf des Ladeluftkühlers 12 abzweigt, an dem Ladeluftkühler 12 vorbei geleitet werden kann, wodurch es durch den Ladeluftkühler 12 nicht kühlbar ist und daher die Temperatur nicht unter den Taupunkt abfällt. Um sicherzustellen, dass das Frischluft-Abgasgemisch, wenn nötig, d.h. bei hohen Temperaturen des Frischluft-Abgasgemisches, weiterhin mittels des Ladeluftkühlers 12 effektiv kühlbar ist, ist stromab der Verdichter 8, 10 und stromauf des Ladeluftkühlers 12 im Luftzufuhrsystem 5 ein Temperatursensor 31 angeordnet, so dass bei Erreichen einer vorgegebenen Temperatur ein im Ladeluftkühlerbypass 30 angeordnetes Ladeluftkühlerbypassventil 32 entsprechend ansteuerbar ist und daraufhin dieses Ladeluftkühlerbypassventil 32 beispielsweise vollständig öffnet oder vollständig schließt oder in einer weiteren Ausführungsform teilweise öffnet.

Für einen optimalen Betrieb der Brennkraftmaschine 1 sind vorzugsweise weitere Sensoren im Abgastrakt 6 sowie im Luftzufuhrsystem 5 vorgesehen, was der Übersichtlichkeit halber nicht näher dargestellt ist. Insbesondere können Temperatur- und/oder Drucksensoren ausgangsseitig des Abgaskrümmers 33, in den Turbinenbypässen 20, 21, eingangs- und ausgangsseitig oder innerhalb der Abgasreinigungseinheit 16, eingangs- und ausgangsseitig des Luftfilters 7, eingangs- und ausgangsseitig der Verdichter 8, 10, in den Abgasrückführungsleitungen 24, 27 und gegebenenfalls an weiteren Stellen angeordnet sein, um die Temperatur- und Druckverhältnisse zu erfassen. Vorzugsweise ist ferner ein Luftmassenstromsensor stromab des Luftfilters 7 vorgesehen, um den Frischluftmassenstrom zu erfassen. Weiterhin sind vorzugsweise Abgassensoren im Abgastrakt 6, wie beispielsweise eine Lambdasonde im Abgaskrümmer 33 und vor und/oder nach oder innerhalb der Abgasreinigungseinheit 16 vorgesehen. Ebenso sind bevorzugt ein oder mehrere nicht gesondert dargestellte Stickoxidsensoren, insbesondere unmittlelbar hinter dem Oxidationskatalysator 34 und/oder hinter dem SCR-Katalysator 36 vorgesehen. Die Signale der vorhandenen Sensoren sind von einer nicht dargestellten Steuer- und Regeleinrichtung verarbeitbar, welche anhand der Signale und gespeicherten Kennlinien und Kennfelder Betriebszustände der Brennkraftmaschine 1 allgemein, insbesondere im Abgastrakt 6 und im Luftzufuhrsystem 5 ermitteln und durch Ansteuerung von Stellgliedern gesteuert und/oder geregelt einstellen kann. Insbesondere sind Abgasrückführmassenströme im Nieder- und Hochdruckpfad sowie ein Lastzustand der Brennkraftmaschine 1 in Bezug auf Drehmoment bzw. Mitteldruck sowie Drehzahl ermittel- bzw. einstellbar.

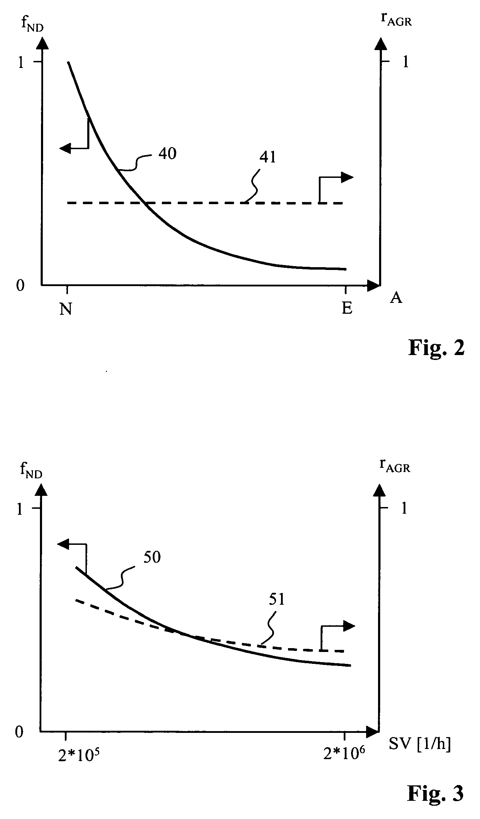

Im Rahmen der Erfindung ist ein schadstoffemissionsarmer Betrieb der Brennkraftmaschine 1 ermöglicht. Insbesondere ist durch eine Beeinflussung von Niederdruckabgasrückführanteil und Hochdruckabgasrückführanteil ein in Bezug auf Stickoxide über lange Betriebszeiten weitgehend zeitstabiles Reinigungsverhalten ermöglicht. Ohne Einschränkung der Allgemeinheit wird dies für die vorliegend anhand von Fig. 1 erläuterte Ausführungsform einer Brennkraftmaschine erfindungsgemäß dadurch verwirklicht, dass bei zumindest annähernd gleichen Betriebspunkten der Brennkraftmaschine 1 mit zunehmender Betriebszeit der Abgasreinigungseinheit 16, insbesondere mit einer damit korrelierenden Alterung des zugehörigen Oxidationskatalysators 34, ein im Wesentlichen abnehmender Niederdruckanteil der insgesamt rückgeführten Abgasmenge eingestellt wird. Die entsprechenden Verhältnisse sind zur Verdeutlichung in Fig. 2 schematisch in Diagrammform dargestellt.

In dem in Fig. 2 dargestellten Diagramm sind in der linken Ordinate ein Niederdruckanteil f_{ND} einer Gesamtabgasrückführmenge und in der rechten Ordinate eine Abgasrückführrate r_{AGR} als Anteil der Gesamtabgasrückführmenge in dem der Brennkraftmaschine 1 über das Luftzufuhrsystem 5 zugeführten Verbrennungsgas jeweils über der Abszisse für einen Zeitparameter A abgetragen. Auf der Abszisse kennzeichnet der Punkt N einen Zeitpunkt, in welchem die Abgasreinigungseinheit 16 bzw. der zugehörige Oxidationskatalysator 34 einen Neuzustand mit keiner oder vernachlässigbarer Alterung aufweisen. Der Punkt E kennzeichnet hingegen einen Zeitpunkt, bei welchem eine vom Hersteller oder von anderer Seite vorgesehene Lebensdauer der Abgasreinigungseinheit 16 bzw. des zugehörige Oxidationskatalysators 34 abgelaufen ist (end of lifetime). Der Zeitpunkt E kann beispielsweise durch eine vorgebbare oder vorgegebene Laufleistung von beispielsweise 200000 km des zugehörigen Kraftfahrzeugs oder durch einen vorgebbaren Grenzwert für einen mit einer Alterung der Abgasreinigungseinheit 16 bzw. des Oxidationskatalysators 34 korrelierenden Alterungsfaktor definiert sein. In einer besonders vorteilhaften Variante kann vorgesehen sein, die Skalierung der Abszisse im Verhältnis zu einem Alterungsfaktor des Oxidationskatalysators 34 vorzunehmen, welcher mit einer Abnahme von dessen katalytischer Wirkung in Bezug auf eine Oxidation von Stickstoffmonoxid (NO) zu Stickstoffdioxid (NO2) korreliert.

Im Diagramm der Fig. 2 zeigt der Verlauf der Spur 40 eine erfindungsgemäß vorgesehene stetige Abnahme des Niederdruckanteils f_{ND} der Gesamtabgasrückführmenge mit zunehmendem Zeitparameter A. Dabei kann der Verlauf der Spur 40 für verschiedene, jeweils gleich Betriebspunkte in einem Last-Drehzahl-Kennfeld der Brennkraftmaschine 1 mehr oder weniger unterschiedlich ausfallen. Es ist jedoch vorgesehen, dass zumindest im überwiegenden Teil des Kennfelds eine stetige Abnahme des Niederdruckanteils f_{ND} über dem Zeitparameter A bzw. der Betriebszeit eingestellt wird. Wie dargestellt, kann über eine Gesamtbetriebsdauer, insbesondere bei mittleren Lastpunkten, eine Abnahme von annähernd 1 bzw. 100 % bis auf annähernd Null vorgesehen sein.

Die ebenfalls im Diagramm eingezeichnete Spur 41 kennzeichnet die erfindungsgemäß über die Betriebszeit annähernd konstant gehaltene Abgasrückführrate r_{AGR} für zumindest annähernd gleiche Betriebspunkte der Brennkraftmaschine 1. Je nach Betriebspunkt kann eine mehr oder weniger große Abgasrückführrate r_{AGR} vorgesehen sein. Typischerweise wird eine mit zunehmender Last abnehmende Abgasrückführrate r_{AGR} eingestellt. Für einen in Fig. 2 exemplarisch dargestellten Betriebspunkt im Bereich mittlerer Teillast ist eine Abgasrückführrate r_{AGR} von etwa 0,45 bzw. 45 % bevorzugt. In einem Betriebspunkt im oberen Lastbereich mit einer Raumgeschwindigkeit von ca. 100000 1/h und einer Temperatur von ca. 350 °C des Abgases bezogen auf den Oxidationskatalysator 34 ist eine Abgasrückführrate r_{AGR} von etwa 0,2 bzw. 20 % eine vorteilhafte Einstellung. Im vorliegenden Fall können durch die erfindungsgemäß vorgesehene Abnahme des Niederdruckanteils f_{ND} der Gesamtabgasrückführmenge mit zunehmendem Betriebszeit folgende Wirkungen erzielt werden.

Mit zeitlich abnehmenden Niederdruckanteil f_{ND} der Gesamtabgasrückführmenge nimmt bei vergleichbaren Betriebspunkten der Brennkraftmaschine 1 der Abgasdurchsatz durch die stromauf von der Abzweigestelle der zweiten Abgasrückführleitung 24 angeordneten Abgasreinigungseinheit 16 ab. Dadurch vermindert sich die Durchsatzbelastung des Oxidationskatalysators 34 und des Partikelfilters 35 und eine infolge von unvermeidlichen Alterungserscheinungen erfolgende Verringerung von deren durchsatzabhängiger katalytischen Wirksamkeit wird somit ausgeglichen. Dies hat in mehrfacher Hinsicht insbesondere vorteilhafte Auswirkungen auf die Stickoxidreduktionsleistung der katalytischen Beschichtung des Partikelfilters 35 sowie des SCR-Katalysators 36. Einerseits wird ein alterungsbedingtes Nachlassen der katalytischen Wirksamkeit der SCR-katalytischen Beschichtung des Partikelfilters 35 über die Betriebszeit wenigstens annähernd kompensiert. Andererseits bleibt die Leistung des Oxidationskatalysators 34 insbesondere bezüglich der Stickstoffdioxidbildung wenigstens annähernd erhalten. Somit kann ein für den Stickoxidumsatz durch selektive katalytische Reduktion mittels Ammoniak vorteilhafter Anteil von Stickstoffdioxid der im Abgas enthaltenen Stickoxide von etwa 40 % bis 50 % annähernd laufzeit- und alterungsunabhängig über einen überwiegenden Teil des Betriebsbereichs Brennkraftmaschine 1 bereitgestellt werden. Zumindest ist ein für die Stickoxidreduktionsleistung der SCR-katalytischen Beschichtung des Partikelfilters 35 nachteiliges, zu starkes Absinken des Stickstoffdioxidgehalts im Abgas unter 50 % ausgangsseitig des Oxidationskatalysators 34 infolge von dessen alterungsbedingter Wirksamkeitseinbuße vermeidbar. Weiterhin wird eine Hydrolyse von über die Zugabevorrichtung 38 zugeführtem Harnstoff mit abnehmendem Abgasdurchsatz und daher auch der Ablauf einer nachfolgend durchgeführten selektiven katalytischen Stickoxidreduktion verbessert.

Wie erläutert, kann mit zeitlich abnehmendem Niederdruckanteil f_{ND} der Gesamtabgasrückführmenge die Stickoxidreduktionsleistung der SCR-Katalysatormaterialbeschichtung des Partikelfilters 35 wenigstens annähernd betriebszeitunabhängig konstant gehalten werden. Somit ist eine im Laufe der Betriebszeit zunehmende Belastung des nachgeschalteten SCR-Katalysators 36 zumindest großteils vermeidbar. Dies erweist sich weiterhin deshalb als vorteilhaft, weil aufgrund der vergleichsweise motorfernen Anordnung der SCR-Katalysator 36 dieser häufig im Niedertemperaturbereich und nur wenig oberhalb seiner Anspringtemperatur betrieben wird. Eine Alterung bewirkt jedoch erfahrungsgemäß einen Anstieg der Anspringtemperatur. Aus diesem Grund liegt speziell für den SCR-Katalysator 36 eine besondere Alterungsempfindlichkeit vor. Da jedoch die Stickoxidbelastung des SCR-Katalysators 36 über die Betriebszeit annähernd konstant gehalten wird, ist es ermöglicht, eine alterungsbedingte Verminderung von dessen Stickoxidreduktionsleistung zu begrenzen. Ein im gegenteiligen Fall aus Sicherheitsgründen erforderliches Vorhalten von zusätzlichem Katalysatorvolumen ist somit ebenfalls vermeidbar, wodurch Kosteneinsparungen ermöglicht sind.

Im Sinne der erläuternden Zusammenhänge ist es bevorzugt, wenn die erfindungsgemäß vorgesehene Abnahme des Niederdruckanteils f_{ND} der Gesamtabgasrückführmenge an eine über die Betriebszeit erfolgende Abnahme der Wirksamkeit des Oxidationskatalysators 34 bezüglich der Oxidation von Stickstoffmonoxid zu Stickstoffdioxid gekoppelt ist, bzw. mit dieser korreliert.

Die erfindungsgemäß vorgesehene Abnahme des Niederdruckanteils f_{ND} der Gesamtabgasrückführmenge über der Betriebszeit hat zur Folge, dass bei neuer oder gering gealterter Abgasreinigungseinheit 16 der Abgasdurchsatz durch diese bei vergleichbaren Betriebspunkten vergleichsweise hoch ist und der Oxidationskatalysator 34 vergleichsweise stark belastet wird. Einer in neuem bzw. gering gealtertem Zustand des Oxidationskatalysators 34 stark ausgeprägten Stickstoffdioxidbildung, welche sich für die stromab vorgesehene selektive Stickoxidreduktion nachteilig auswirken würde, wird daher entgegengewirkt.

Da oberhalb von etwa 50 % Stickstoffdioxidanteil erfahrungsgemäß die selektive katalytische Stickoxidreduktion nachteilig beeinflusst ist, kann es vorgesehen sein, den Oxidationskatalysator 34 derart zu dimensionieren, dass zumindest im überwiegenden Teil des Betriebsbereichs der Brennkraftmaschine 1 dessen Stickstoffdioxidbildung im Neuzustand auf etwa 50 % begrenzt ist. Ist dies nicht oder nur eingeschränkt möglich, so ist es vorzugsweise zusätzlich oder alternativ vorgesehen, eine unerwünscht hohe Stickstoffdioxidbildung durch eine Anreicherung des Abgases mit unverbrannten Kraftstoffbestandteilen zu verhindern. Wie von den Erfindern erkannt wurde, wirken unverbrannte Kraftstoffbestandteile inhibierend auf eine katalytische Wirkung typischerweise eingesetzter Oxidationskatalysatoren in Bezug auf die Oxidation von Stickstoffmonoxid zu Stickstoffdioxid. Insbesondere bei neuem oder wenig gealtertem Oxidationskatalysator 34 und/oder bei niedrigen Raumgeschwindigkeiten von beispielsweise weniger als 30000 1/h kann zu diesem Zweck eine späte Kraftstoffnacheinspritzung in einen oder mehrere der Arbeitszylinder 3 der Brennkraftmaschine 1 vorgesehen sein. Diese wird bevorzugt so eingestellt, dass sich eingangsseitig des ersten im Abgastrakt 6 vorhandenen Bauteils mit einer Eigenschaft zur selektiven katalytischen Stickoxidreduktion mit Ammoniak ein Stickstoffdioxid-Anteil von weniger als 70 %, insbesondere von 50 % oder weniger ergibt. Bevorzugt ist eine Nacheinspritzung bei etwa 30 Grad bis 90 Grad Kurbelwinkel nach dem oberen Totpunkt des Kompressionstakts. Ein nachmotorische Zugabe von Kraftstoff stromauf des Oxidationskatalysators 34 ist ebenfalls möglich und auch zur Unterstützung einer Regeneration des Partikelfilters 35 vorteilhaft.

Wie erläutert, ist insgesamt durch einen mit zunehmender Betriebszeit der Abgasreinigungseinheit im Wesentlichen abnehmenden Niederdruckanteil f_{ND}, gegebenenfalls in Verbindung mit einer späten Kraftstoffnacheinspritzung, eine weitgehend laufzeit- und betriebspunktunabhängige Einstellung eines für eine selektive katalytische Stickoxidreduktion günstigen Anteils von Stickstoffdioxid von etwa 40 % bis 50 % im Abgas ermöglicht.

Insbesondere für eine günstige Beeinflussung einer im Abgastrakt 6 vorgesehenen selektiven katalytischen Stickoxidreduktion durch Einstellung eines hierfür günstigen Stickstoffdioxidanteils aber auch für den Betrieb der Brennkraftmaschine 1 insgesamt, ist ferner eine vom Abgasmassenstrom abhängige Einstellung des Niederdruckanteils f_{ND} der Gesamtabgasrückführmenge bzw. des Verhältnisses von Niederdruckanteil f_{ND} und Hochdruckanteil der Gesamtabgasrückführmenge vorgesehen. Weiterhin ist auch eine Variation der Gesamtabgasrückführrate in Abhängigkeit von dem von der Brennkraftmaschine 1 gelieferten Abgasmassenstrom vorgesehen. Zur Erläuterung der vorzugsweise vorgesehenen Einstellungen wird nachfolgend auf Fig. 3 Bezug genommen.

In dem in Fig. 3 dargestellten Diagramm sind analog Fig. 2 in der linken Ordinate ein Niederdruckanteil f_{ND} einer Gesamtabgasrückführmenge und in der rechten Ordinate eine Abgasrückführrate r_{AGR} als Anteil der Gesamtabgasrückführmenge in dem der Brennkraftmaschine 1 über das Luftzufuhrsystem 5 zugeführten Verbrennungsgas abgetragen. Auf der für beide Ordinaten zugehörigen Abszisse ist eine Raumgeschwindigkeit SV des von der Brennkraftmaschine 1 gelieferten Abgases abgetragen. Die angegebenen SV-Werte veranschaulichen die Größenverhältnisse lediglich beispielhaft und können sich auf das Volumen des Oxidationskatalysators 34 oder des SCR-Katalysators 36 beziehen.

Wie durch die Spur 50 dargestellt, ist es erfindungsgemäß vorgesehen, für gleiche Betriebspunkte der Brennkraftmaschine 1 einen mit zunehmender Raumgeschwindigkeit SV abnehmenden Niederdruckanteil f_{ND} einzustellen. Wie bereits erwähnt, ist daneben auch eine Abhängigkeit des Niederdruckanteils f_{ND} vom Lastpunkt selbst sowie von der Betriebszeit gegeben, weshalb Spur 50 lediglich schematisch die erfindungsgemäß vorgesehene abnehmende Tendenz wiedergibt.

Auch für die Abgasrückführrate r_{AGR} ist erfindungsgemäß eine Abnahme mit zunehmender Raumgeschwindigkeit SV vorgesehen, was durch den Verlauf der Spur 51 verdeutlicht wird. Erfindungsgemäß ist jedoch für den Niederdruckanteil f_{ND} eine stärkere Abnahme mit zunehmender Raumgeschwindigkeit SV bzw. zunehmendem Abgasmassenstrom vorgesehen als für die Abgasrückführrate r_{AGR}. Vorzugsweise ist bei gleichen Werten für die Raumgeschwindigkeit SV der Gradient der Spur 50 kleiner, d.h. stärker negativ, als der Gradient der Spur 51.

## Patentansprüche

1. Verfahren zum Betreiben einer Kraftfahrzeug-Brennkraftmaschine mit einem eine katalytisch und/oder filtertechnisch wirksame Abgasreinigungseinheit (16) aufweisenden Abgastrakt (6), bei dem Brennräumen (3) der Brennkraftmaschine (1) um eine Gesamtabgasrückführrate (r_{AGR}) von aus dem Abgastrakt (6) abgezweigtem Abgas ergänzte Verbrennungsluft zugeführt wird, wobei die Gesamtabgasrückführrate (r_{AGR}) einen stromab von der Abgasreinigungseinheit (16) abgezweigten Niederdruckanteil (f_{ND}) und einen stromauf von einer im Abgastrakt (6) angeordneten Abgasturboladerturbine (14; 15) abgezweigten Hochdruckanteil aufweist,
**dadurch gekennzeichnet, dass**
bei zumindest annähernd gleichen Betriebspunkten der Brennkraftmaschine (1) mit zunehmender Betriebszeit der Abgasreinigungseinheit (16) ein im Wesentlichen abnehmender Niederdruckanteil (f_{ND}) eingestellt wird.

2. Verfahren nach Anspruch 1,
**dadurch gekennzeichnet, dass**
bei zumindest annähernd gleichen Betriebspunkten der Brennkraftmaschine (1) die Gesamtabgasrückführrate (r_{AGR}) mit zunehmender Betriebszeit der Abgasreinigungseinheit (16) im Wesentlichen konstant gehalten wird.

3. Verfahren nach Anspruch 1 oder 2,
**dadurch gekennzeichnet, dass**
mit zunehmendem Abgasmassenstrom stromauf von der Abzweigung des Niederdruckanteils (f_{ND}) ein im Wesentlichen abnehmender Niederdruckanteil (f_{ND}) eingestellt wird.

4. Verfahren nach einem der Ansprüche 1 bis 3,
**dadurch gekennzeichnet, dass**
mit zunehmendem Abgasmassenstrom stromauf von der Abzweigung des Niederdruckanteils (f_{ND}) eine im Wesentlichen abnehmende Gesamtabgasrückführrate (r_{AGR}) eingestellt wird.

5. Verfahren nach Anspruch 3 und 4,
**dadurch gekennzeichnet, dass**
für den Niederdruckanteil (f_{ND}) eine stärkere Abnahme eingestellt wird als für die Abnahme der Gesamtabgasrückführrate (r_{AGR}).

6. Verfahren nach einem der Ansprüche 1 bis 5,
**dadurch gekennzeichnet, dass**
bei einer wenigstens annähernd neuen Abgasreinigungsanlage (16) der Niederdruckanteil (f_{ND}) wenigstens doppelt so groß eingestellt wird wie nach einer Betriebszeit der Abgasreinigungseinheit (16), die einer Laufzeit des zugehörigen Kraftfahrzeugs von wenigstens 100000 km entspricht.

7. Verfahren nach einem der Ansprüche 1 bis 6,
**dadurch gekennzeichnet, dass**
stromab eines Oxidationskatalysators (34) der Abgasreinigungseinheit (16) mittels eines SCR-Katalysators eine Reduktion von im Abgas enthaltenen Stickoxiden vorgenommen wird.

8. Verfahren nach Anspruch 7,
**dadurch gekennzeichnet, dass**
der Niederdruckanteil (f_{ND}) und/oder eine Menge von nacheingespritztem Kraftstoff derart eingestellt werden, dass der Stickstoffdioxid-Anteil von im Abgas enthaltenem Stickoxid ausgangsseitig des Oxidationskatalysators (34) und/oder eingangsseitig des SCR-Katalysators weniger als 70 %, insbesondere annähernd 50 % oder weniger beträgt.

## Claims

1. Method for operating a motor vehicle internal combustion engine with an exhaust system (6) having an exhaust gas purification unit (16) acting catalytically or by filtration, wherein combustion air supplemented by a total exhaust gas recirculation rate (r_{AGR}) of exhaust gas diverging from the exhaust system (6) is fed to combustion chambers (3) of the internal combustion engine (1), wherein the total exhaust gas recirculation rate (r_{AGR}) has a low pressure portion (f_{ND}) diverged downstream from the exhaust gas purification unit (16) and a high pressure portion diverged upstream from an exhaust gas turbocharger turbine (14; 15) arranged in the exhaust system (6),
**characterised in that**
with at least approximately equal operating points of the internal combustion engine (1), a substantially decreasing low pressure portion (f_{ND}) is adjusted as the operating time of the exhaust gas purification unit (16) increases.

2. Method according to claim 1,
**characterised in that** with at least approximately equal operating points of the internal combustion engine (1), the total exhaust gas recirculation rate (r_{AGR}) is kept substantially constant as the operating time of the exhaust gas purification unit (16) increases.

3. Method according to claim 1 or 2,
**characterised in that**
a substantially decreasing low pressure portion (f_{ND}) is adjusted upstream from the divergence point of the low pressure portion (f_{ND}) as the exhaust gas mass flow increases.

4. Method according to one of claims 1 to 3,
**characterised in that**
a substantially decreasing total exhaust gas recirculation rate (r_{AGR}) is adjusted upstream from the divergence point of the low pressure portion (f_{ND}) as the exhaust gas mass flow increases.

5. Method according to claims 3 and 4,
**characterised in that**
a greater decrease is adjusted for the low pressure portion (f_{ND}) than for the decrease in the total exhaust gas recirculation rate (r_{AGR}).

6. Method according to one of claims 1 to 5,
**characterised in that**
with an at least virtually new exhaust gas purification system (16) the low pressure portion (f_{ND}) is adjusted to at least double the size of that adjusted after an operating time of the exhaust gas purification unit (16) which corresponds to a running time of the associated motor vehicle of at least 100,000 km.

7. Method according to one of claims 1 to 6,
**characterised in that**
a reduction in nitrogen oxides contained in the exhaust gas is carried out downstream of an oxidation catalyst (34) of the exhaust gas purification unit (16) by means of a SCR catalyst.

8. Method according to claim 7,
**characterised in that**
the low pressure portion (f_{ND}) and / or a quantity of subsequently injected fuel is / are adjusted so that the proportion of nitrogen dioxide in the nitrogen oxide contained in the exhaust gas at the outlet side of the oxidation catalyst (34) and / or at the inlet side of the SCR catalyst is less than 70%, in particular approximately 50% or less.

## Revendications

1. Procédé de fonctionnement d'un moteur à combustion interne de véhicule automobile comprenant une ligne d'échappement (6) comportant un système d'épuration des gaz d'échappement (16) à action catalytique et/ou agissant en tant que filtre, les chambres de combustion (3) du moteur à combustion interne (1) étant alimentées en air de combustion complété par le gaz d'échappement dévié de la ligne d'échappement à un taux global de recirculation des gaz d'échappement (r_{AGR}), le taux global de recirculation des gaz d'échappement (r_{AGR}) présentant une part basse pression (f_{ND}) déviée en aval du système d'épuration de gaz d'échappement (16) et une part haute pression déviée en aval d'une surcompresseur de gaz d'échappement (14, 15) disposé dans la ligne d'échappement (6), **caractérisé en ce qu'**à des points de fonctionnement au moins approximativement identiques du moteur à combustion (1) une part basse pression (f_{NP}) sensiblement décroissante étant réglée au moment de la durée de fonctionnement croissante du système d'épuration des gaz d'échappement (16).

2. Procédé selon la revendication 1, **caractérisé en ce qu'**à des points de fonctionnement au moins approximativement identiques du moteur à combustion interne (1), le taux de recirculation total des gaz d'échappement (r_{AGR}) est maintenu essentiellement constant au moment de la durée de fonctionnement croissant du système d'épuration des gaz d'échappement (16).

3. Procédé selon la revendication 1 ou 2, **caractérisé en ce qu'**à l'aide d'un débit massique de gaz d'échappement croissant en amont de la dérivation de la part basse pression (f_{ND}) est réglée une part basse pression (fND) essentiellement décroissante.

4. Procédé selon l'une quelconque des revendications 1 à 3, **caractérisé en ce qu'**à l'aide d'un débit massique de gaz d'échappement croissant en amont de la dérivation de la part basse pression (f_{ND}) est réglé un taux de recirculation total des gaz d'échappement (r_{AGR}) essentiellement décroissant.

5. Procédé selon la revendication 3 et la revendication 4, **caractérisé en ce que** pour la part basse pression (f_{ND}) est réglée une plus forte diminution que celle pour la diminution du taux de recirculation des gaz d'échappement (r_{AGR}).

6. Procédé selon l'une quelconque des revendications 1 à 5, **caractérisé en ce que** pour une installation d'épuration des gaz d'échappement (16) au moins approximativement nouvelle, la part basse pression (f_{ND}) est au moins le double qu'après une durée de fonctionnement du système d'épuration des gaz d'échappement (16), qui correspond à la durée de fonctionnement du véhicule automobile associé d'au moins 100 000 km.

7. Procédé selon l'une quelconque des revendications 1 à 6, **caractérisé en ce qu'**en aval d'un catalyseur à oxydation (34) du système d'épuration des gaz d'échappement (16) se produit au moyen d'un catalyseur à réduction catalytique sélective une réduction des oxydes azotiques contenus dans les gaz d'échappement.

8. Procédé selon la revendication 7, **caractérisé en ce que** la part basse pression (f_{ND}) et/ou une quantité du carburant post-injecté sont réglées de telle sorte que la partie du dioxyde d'azote provenant des oxydes azotiques contenus dans les gaz d'échappement côté sortie du catalyseur à oxydation (34) et/ou côté admission du catalyseur à réduction catalytique sélective soit inférieure à 70 % en particulier approximativement inférieure ou égale à 50 %.
